# EUROPEAN PATENT APPLICATION

(11) **EP 2 521 117 A1**
(43) Date of publication of application: **07.11.2012**
(21) Application number: 10846597.2
(22) Date of filing: 27.10.2010
(51) Int. Cl.: G09F 9/00, G02F 1/1345

(54) **DISPLAY DEVICE**

(30) Priority: 23.02.2010 JP 2010037745
(71) Applicant: Sharp Kabushiki Kaisha, Osaka-shi, Osaka 545-8522 (JP)
(72) Inventor: HIDA, Yasuhiro, Osaka 545-8522 (JP); NAGAOKA, Gen, Osaka 545-8522 (JP); MIYAZAKI, Hiroki, Osaka 545-8522 (JP)
(74) Representative: Müller-Boré & Partner Patentanwälte
(86) International application number: PCT/JP2010/069034
(87) International publication number: WO 2011/104934

(57) **Abstract**

A display device that can easily attach a connection member to a display panel is provided. This liquid crystal display device (1) includes: a liquid crystal display panel (2) that includes a TFT substrate (10) and a CF substrate (20); a FPC (30) that is electrically connected to the TFT substrate; and a FPC (40) that is electrically connected to the CF substrate. An alignment mark (13) is provided in the TFT substrate. An alignment mark (41) corresponding to the alignment mark (13) is provided in the FPC (40).

## Description

### Technical Field

The present invention relates to a display device and more particularly to a display device including a display panel and a connection member that is electrically connected to the display panel.

### Background Art

Conventionally, there is known a display device incorporating a display panel including a TFT substrate on which a TFT (thin film transistor) layer (thin-film element layer) is formed and a CF (color filter) substrate which is arranged opposite the TFT substrate and on which a color filter layer is formed.

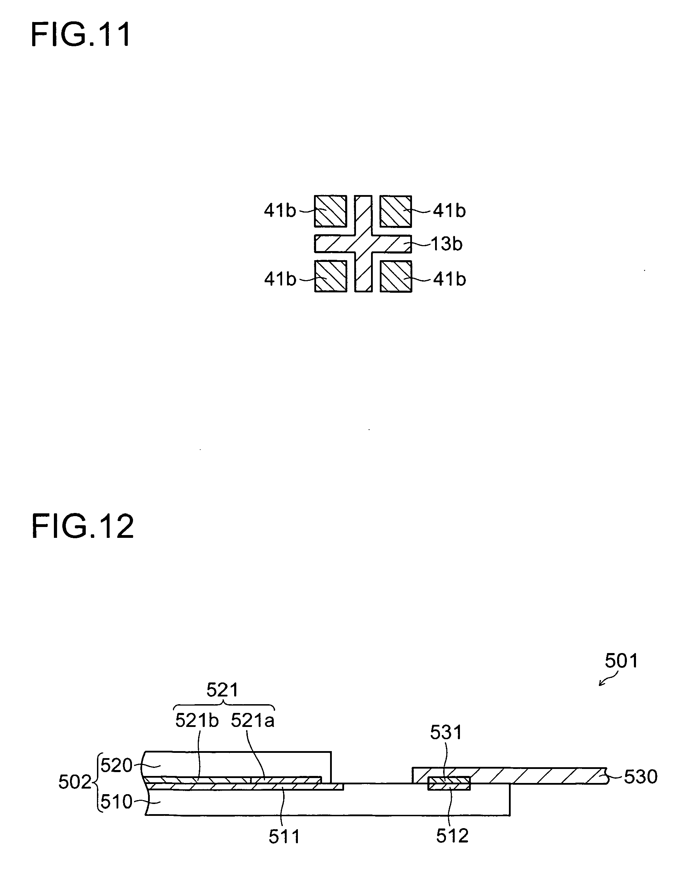

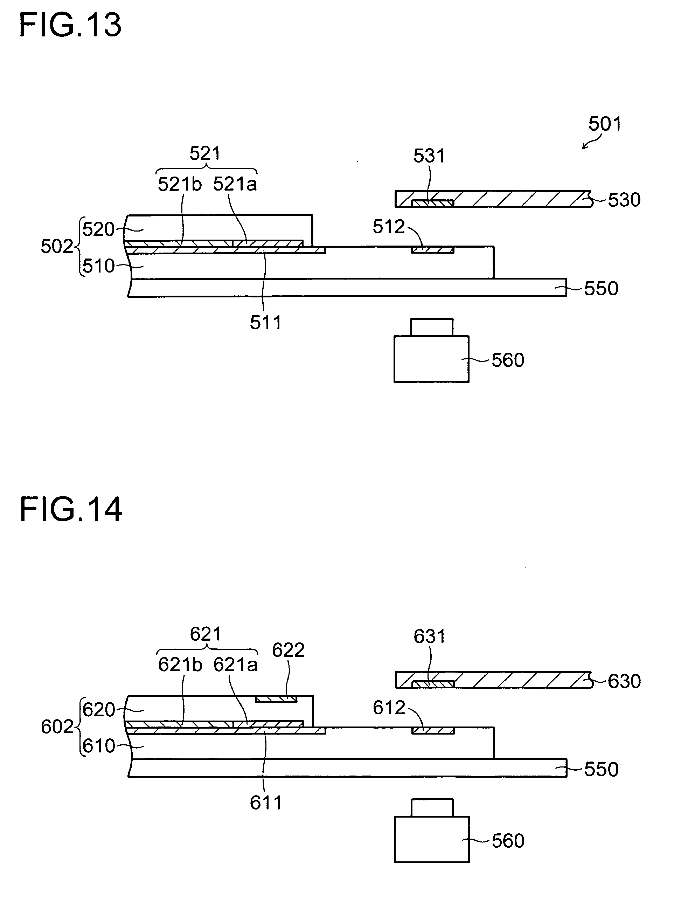

Fig. 12 is a cross-sectional view showing the structure of an example of a conventional display device. Fig. 13 is a cross-sectional view for illustrating a method of manufacturing the conventional display device shown in Fig. 12.

The conventional display device 501 includes, as shown in Fig. 12, a TFT substrate 510, a CF substrate 520 that is arranged opposite the TFT substrate 510 and a FPC (flexible printed circuit) 530 (connection member) that is electrically connected to the TFT substrate 510.

Between the TFT substrate 510 and the CF substrate 520, an unillustrated liquid crystal layer is arranged. The TFT substrate 510, the CF substrate 520 and the liquid crystal layer (not shown) constitute a liquid crystal display panel 502.

In the upper surface (the surface on the side of the CF substrate 520) of the TFT substrate 510, a TFT layer 511 and an alignment mark 512 are formed.

In the lower surface (the surface on the side of the TFT substrate 510) of the CF substrate 520, a color filter layer 521 is formed. This color filter layer 521 includes a black matrix layer 521 a that functions as a light blocking layer and a coloring layer 521b that is colored red, green or blue.

In the lower surface (the surface on the side of the TFT substrate 510) of the FPC 530, an alignment mark 531 is formed. This alignment mark 531 is arranged, as seen in plan view, in the same position as the alignment mark 512 of the TFT substrate 510.

In the conventional display device 501, when the FPC 530 is electrically connected to the TFT substrate 510, as shown in Fig. 13, the liquid crystal display panel 502 is arranged on a transparent stage 550.

Then, the alignment mark 512 of the TFT substrate 510 and the alignment mark 531 of the FPC 530 are recognized with a camera 560 arranged below the stage 550, and the FPC 530 and the TFT substrate 510 are aligned such that the alignment mark 531 of the FPC 530 is positioned directly above the alignment mark 512 of the TFT substrate 510.

Thereafter, the FPC 530 is thermally bonded to the TFT substrate 510 through an adhesive layer (not shown) such as an ACF. Thus, the FPC 530 is electrically connected to the TFT substrate 510

A method of aligning the FPC and the TFT substrate with the alignment mark provided in the FPC and the alignment mark provided in the TFT substrate is disclosed, for example, in patent document 1.

Conventionally, there is known a display device that incorporates a display panel in which a CF substrate functions as a touch panel and which is integral with the touch panel. In this type of display panel which is integral with the touch panel, it is necessary to electrically connect a FPC and the like to the CF substrate functioning as the touch panel. When the FPC is electrically connected to the CF substrate, the method of aligning the TFT substrate 510 of the conventional display device 501 described above and the FPC 530 can be considered to be used.

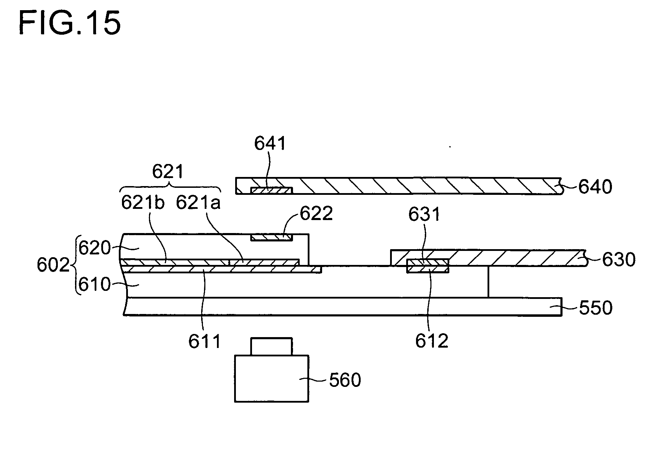

Figs. 14 and 15 are cross-sectional views for illustrating an example of the method of electrically connecting the FPC to the CF substrate functioning as the touch panel.

When the FPC 640 (see Fig. 15) is electrically connected to the CF substrate 620 functioning as the touch panel, as shown in Fig. 14, a liquid crystal display panel 602 is arranged on the transparent stage 550. Then, as in the method of electrically connecting the FPC 530 to the TFT substrate 510 described above, a FPC 630 is electrically connected to a TFT substrate 610.

The TFT substrate 610 and the FPC 630 are configured, for example, as the TFT substrate 510 and the FPC 530 of the conventional display device 501 shown in Fig. 12 are configured. Specifically, in the upper surface (the surface on the side of the CF substrate 620) of the TFT substrate 610, a TFT layer 611 and an alignment mark 612 are formed. In the lower surface (the surface on the side of the TFT substrate 610) of the FPC 630, an alignment mark 631 is formed.

In the lower surface (the surface on the side of the TFT substrate 610) of the CF substrate 620, a color filter layer 621 including a black matrix layer 621 a and a coloring layer 621 b is formed; in the upper surface (the surface on the opposite side of the TFT substrate 610) of the CF substrate 620, an alignment mark 622 is formed.

As shown in Fig. 15, in the lower surface (the surface on the side of the CF substrate 620) of the FPC 640 that is electrically connected to the CF substrate 620, an alignment mark 641 is formed.

Then, the alignment mark 622 of the CF substrate 620 and the alignment mark 641 of the FPC 640 are recognized with the camera 560, and the FPC 640 and the CF substrate 620 are aligned such that the alignment mark 641 of the FPC 640 is positioned directly above the alignment mark 622 of the CF substrate 620.

Thereafter, the FPC 640 is thermally bonded to the CF substrate 620 through an adhesive layer (not shown) such as an ACF. Thus, the FPC 640 is electrically connected to the CF substrate 620.

### Related Art Document

### Patent Document

Patent document 1: JP-A-2000-114677

### Disclosure of the Invention

### Problems to be Solved by the Invention

However, in the liquid crystal display panel 602 shown in Figs. 14 and 15, the black matrix layer 621a and the TFT layer 611 are arranged in a position directly below the alignment mark 622 of the CF substrate 620. Hence, when the FPC 640 and the CF substrate 620 are aligned, it is difficult to recognize, with the camera 560, the alignment mark 622 of the CF substrate 620 and the alignment mark 641 of the FPC 640. Consequently, since it is difficult to align the FPC 640 and the CF substrate 620, it is disadvantageously difficult to attach the FPC 640 to the CF substrate 620.

Although a method of designing the black matrix layer 621 a and the TFT layer 611 such that the they are prevented from being positioned directly below the alignment mark 622 can be considered, the number of constraints on the design is increased. Specifically, for example, when the black matrix layer 621 a is moved inwardly (a direction away from the end surface of the CF substrate 620) of the CF substrate 620, an inconvenience such as the escape of light is produced. A region where the TFT layer 611 is formed is fixed; if, within such a region, the TFT layer 611 is formed such that the TFT layer 611 is prevented from being positioned directly below the alignment mark 622, it is necessary to decrease (narrow) the width of wiring and the space of the TFT layer 611. Hence, it may be impossible to form the wiring of the TFT layer.

Although a method of arranging the camera on the upper side of the liquid crystal display panel 602 can be considered, it is necessary to adapt the device such as by attaching the camera additionally. In this case, it is also necessary to provide an alignment mark in the upper surface of the FPC 640. Furthermore, when the FPC 640 is manufactured, since the alignment mark in the upper surface of the FPC 640 is more likely to be displaced with respect to an electrode or wiring (not shown) on the lower surface of the FPC 640, it is difficult to align the FPC 640 and the CF substrate 620.

The present invention is made to solve the foregoing problems; an object of the present invention is to provide a display device in which a connection member can easily be attached to a display panel.

### Means for Solving the Problem

To achieve the above object, according to one aspect of the present invention, there is provided a display device including: a display panel that includes a first substrate and a second substrate arranged opposite the first substrate; a first connection member that is electrically connected to the first substrate of the display panel; and a second connection member that is electrically connected to the second substrate of the display panel, in which a first locating portion is provided in the first substrate or the first connection member, and a second locating portion corresponding to the first locating portion is provided in the second connection member.

In the display device according to the one aspect, as described above, the first locating portion is provided in the first substrate or the first connection member, and the second locating portion corresponding to the first locating portion is provided in the second connection member. In this way, when the second connection member is attached to the second substrate (display panel), the first locating portion and the second locating portion are aligned, and thus it is possible to align the first substrate or the first connection member and the second connection member. In other words, the second substrate and the second connection member can be indirectly aligned. Consequently, it is possible to easily attach the second connection member to the second substrate (display panel).

In the display device according to the one aspect, as described above, unlike the case where the first locating portion is provided in the second substrate, the first locating portion is provided in the first substrate or the first connection member, and thus it is possible to arrange the first locating portion in a region where a black matrix layer and a thin-film element layer are not provided. In this way, for example, when the second connection member and the display panel are aligned with a camera, since the first locating portion and the second locating portion can be recognized with the camera, it is possible to easily align the first substrate or the first connection member and the second connection member. Consequently, it is possible to more easily attach the second connection member to the display panel. For example, when a locating pin is used to align the first substrate or the first connection member and the second connection member, a though hole through which the locating pin is inserted can be arranged in the region where the black matrix layer and the thin-film element layer are not provided. Thus, it is possible to easily form a through hole in the first substrate or the first connection member and the second connection member.

In the display device according to the one aspect described above, the second locating portion is preferably provided in a portion of the second connection member outside the second substrate. In this configuration, the black matrix layer is prevented from being arranged in a position directly below the second location portion. In this way, for example, when the second connection member and the display panel are aligned with the camera, the second locating portion can easily be recognized with the camera. For example, when the locating pin is used to align the first substrate or the first connection member and the second connection member, the though hole through which the locating pin is inserted can be easily formed in the region where the black matrix layer is not provided.

Preferably, in the display device according to the one aspect described above, a thin-film element layer is provided in the surface of the first substrate on the side of the second substrate, and the second locating portion is provided in a portion of the second connection member outside the thin-film element layer. In this configuration, the thin-film element layer is prevented from being arranged in a position directly below the second locating portion. In this way, for example, when the second connection member and the display panel are aligned with the camera, the second locating portion can easily be recognized with the camera. For example, when the locating pin is used to align the first substrate or the first connection member and the second connection member, the though hole through which the locating pin is inserted can easily be formed in a region where the thin-film element layer is not provided.

Preferably, in the display device according to the one aspect described above, the second substrate functions as a touch panel. As described above, when the second substrate functions as the touch panel, since it is necessary to electrically connect the second substrate to the connection member (second connection member), it is particularly effective to configure the display device as described above.

Preferably, in the display device according to the one aspect described above, the first locating portion includes an alignment mark provided in the first substrate, and the second locating portion includes an alignment mark provided in the second connection member. In this configuration, the first locating portion and the second locating portion are recognized with the camera, and thus it is possible to easily align the first substrate (display panel) and the second connection member.

Preferably, in the display device in which the first locating portion and the second locating portion include the alignment marks, the second locating portion is provided in the surface of the second locating member on the side of the second substrate. In this configuration, with the camera arranged below the display panel, it is possible to easily recognize the second locating portion.

Preferably, in the display device in which the first locating portion and the second locating portion include the alignment marks, the first locating portion is provided in a surface of the first substrate on the side of the second substrate. In this configuration, it is possible to form the first locating portion at the same time when the thin-film element layer is formed in the first substrate. As compared with the case where the first locating portion is provided in the surface of the first substrate on the opposite side of the second substrate, it is possible to reduce the distance between the first locating portion and the second locating portion. In this way, when the first locating portion and the second locating portion are recognized with the camera, it is possible to reduce the case where either of the first locating portion and the second locating portion goes out of focus. Consequently, it is possible to reduce the decrease in the accuracy of aligning the first locating portion (the first substrate) and the second locating portion (the second connection member).

Preferably, in the display device in which the first locating portion and the second locating portion include the alignment marks, the first locating portion is provided in a portion of the first substrate between the second substrate and the first connection member. In this configuration, the first connection member and the second substrate are prevented from being arranged between the first locating portion and the second locating portion, and thus it is possible to easily reduce the case where the second locating portion cannot be recognized with the camera.

Preferably, in the display device according to the one aspect described above, the first locating portion includes a through hole provided in the first connection member, and the second locating portion includes a through hole provided in the second connection member. In this configuration, for example, the locating pin or the like is inserted through the first locating portion, and thereafter the second locating portion is inserted in the locating pin, and thus it is possible to easily align the first connection member and the second connection member. In this way, it is possible to easily and indirectly align the display panel and the second connection member.

Preferably, in the display device in which the first locating portion and the second locating portion include the through holes, the first locating portion is provided in a portion of the first connection member outside the first substrate. In this configuration, it is possible to form the through hole in a region where the black matrix layer and the thin-film element layer are not provided, as seen in plan view. The first locating portion is provided in the portion of the first connection member outside the first substrate, and thus it is possible to insert the locating pin through the first locating portion without the provision of a through hole in the first substrate. Thus, it is possible to more easily align the first connection member and the second connection member.

Preferably, in the display device according to the one aspect described above, the first locating portion and the second locating portion are arranged, as seen in plan view, in the same position. In this configuration, the first locating portion and the second locating portion can be easily aligned.

In the display device according to the one aspect described above, the first connection member may include a FPC or a FFC and the second connection member may include a FPC or a FFC.

Preferably, in the display device according to the one aspect described above, in each of the second substrate and the second connection member, a connection determination mark for determining whether or not the second substrate and the second connection member are connected is provided, and the connection determination mark of the second substrate and the connection determination mark of the second connection member are arranged in corresponding positions. In this configuration, after the second connection member is attached to the second substrate, it is possible to determine whether or not the second connection member is attached to the desired position of the second substrate.

Preferably, in the display device according to the one aspect described above, a plurality of first locating portions are provided, and a plurality of second locating portions are provided. In this configuration, it is possible to reduce the rotational displacement in the planar direction between the first substrate or the first connection member and the second connection member, and thus it is possible to reduce the rotational displacement in the planar direction between the second substrate (display panel) and the second connection member.

Preferably, in the display device according to the one aspect described above, the first locating portion and the second locating portion are formed that the sizes and shapes thereof are the same as each other. In this configuration, it is possible to easily align the first locating portion and the second locating portion.

### Advantages of the Invention

As described above, according to the present invention, it is possible to obtain the display device that can easily attach the connection member to the display panel.

### Brief Description of Drawings

[Fig. 1] A cross-sectional view showing the structure of a liquid crystal display device according to a first embodiment of the present invention;
[Fig. 2] A plan view showing the structure of the liquid crystal display device
shown in Fig. 1 and according to the first embodiment of the present invention;
[Fig. 3] A cross-sectional view for illustrating a method of manufacturing the liquid crystal display device shown in Fig. 1 and according to the first embodiment of the present invention;
[Fig. 4] A cross-sectional view for illustrating the method of manufacturing the liquid crystal display device shown in Fig. 1 and according to the first embodiment of the present invention;
[Fig. 5] A cross-sectional view showing the structure of a liquid crystal display device according to a second embodiment of the present invention;
[Fig. 6] A plan view showing the structure of the liquid crystal display device shown in Fig. 5 and according to the second embodiment of the present invention;
[Fig. 7] A cross-sectional view for illustrating a method of manufacturing the liquid crystal display device shown in Fig. 5 and according to the second embodiment of the present invention;
[Fig. 8] A cross-sectional view for illustrating the method of manufacturing the liquid crystal display device shown in Fig. 5 and according to the second embodiment of the present invention;
[Fig. 9] A cross-sectional view for illustrating the method of manufacturing the liquid crystal display device shown in Fig. 5 and according to the second embodiment of the present invention;
[Fig. 10] A plan view showing the structure of a TFT substrate and an alignment mark of a FPC in a liquid crystal display device corresponding to a first variation of the present invention;
[Fig. 11] A plan view showing the structure of a TFT substrate and alignment marks of a FPC in a liquid crystal display device corresponding to a second variation of the present invention;
[Fig. 12] A cross-sectional view showing the structure of an example of a conventional display device;
[Fig. 13] A cross-sectional view for illustrating a method of manufacturing the conventional display device shown in Fig. 12;
[Fig. 14] A cross-sectional view for illustrating an example of the method of electrically connecting a FPC to a CF substrate functioning as a touch panel; and
[Fig. 15] A cross-sectional view for illustrating the example of the method of electrically connecting the FPC to the CF substrate functioning as the touch panel.

### Description of Embodiments

Embodiments of the present invention will be described below with reference to accompanying drawings. For ease of understanding, even a cross-sectional view may not be hatched; even a plan view may be hatched.

### (First embodiment)

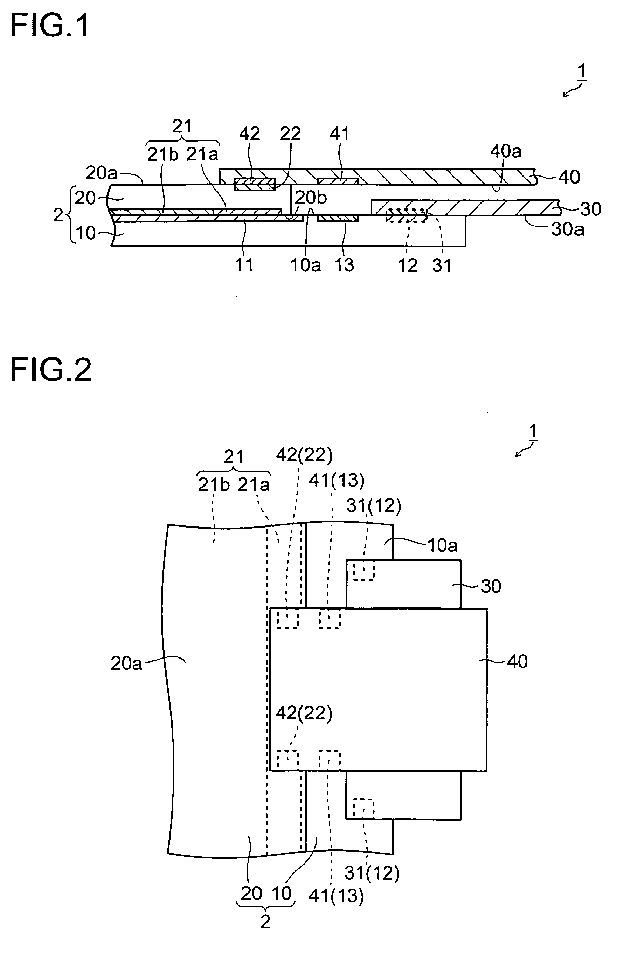

The structure of a liquid crystal display device 1 according to a first embodiment of the present invention will first be described with reference to Figs. 1 and 2.

The liquid crystal display device 1 according to the first embodiment of the present invention includes, as shown in Fig. 1, a TFT substrate 10, a CF substrate 20 that is arranged opposite the TFT substrate 10, a FPC 30 that is electrically connected to the TFT substrate 10 and a FPC 40 that is electrically connected to the CF substrate 20. The liquid crystal display device 1 is an example of a "display device" of the present invention. The TFT substrate 10 is an example of a "first substrate" of the present invention; the CF substrate 20 is an example of a "second substrate" of the present invention. The FPC 30 is an example of a "first connection member" of the present invention; the FPC 40 is an example of a "second connection member" of the present invention.

Between the TFT substrate 10 and the CF substrate 20, an unillustrated liquid crystal layer is arranged. The TFT substrate 10, the CF substrate 20 and the liquid crystal layer (not shown) constitute a liquid crystal display panel 2. This liquid crystal display panel 2 functions as a display panel by being illuminated by an unillustrated backlight device. The liquid crystal display panel 2 is an example of a "display panel" of the present invention.

The TFT substrate 10 is transparent, and is formed with an insulating substrate such as a glass substrate.

Here, in the first embodiment, in the upper surface (the surface on the side of the CF substrate 20) 10a of the TFT substrate 10, a TFT layer 11 and alignment marks 12 and 13 are formed. The TFT layer 11 is an example of a "thin-film element layer" of the present invention; the alignment mark 13 is an example of a "first locating portion" of the present invention.

The TFT layer 11 is electrically connected to the FPC 30 through a plurality of wirings that are formed on the upper surface 10a of the TFT substrate 10 and that are not shown. The TFT layer 11 is formed to have a slightly larger area than the display region (not shown) of the liquid crystal display panel 2. For example, in Fig. 1, the TFT layer 11 is formed in a region extending outwardly of the region where the CF substrate 20 is arranged; the TFT layer 11 may be formed in only a portion (region) within the region where the CF substrate 20 is arranged.

The alignment mark 12 is formed in a portion a predetermined distance away from the portion (region) of the TFT substrate 10 where the CF substrate 20 is arranged.

In the first embodiment, the alignment mark 13 is formed in a portion between the portion of the TFT substrate 10 where the CF substrate 20 is arranged and the portion of the TFT substrate 10 where the FPC 30 is arranged. Specifically, as shown in Figs. 1 and 2, the alignment mark 13 is provided, as seen in plan view, in a portion of the TFT substrate 10 between the CF substrate 20 and the FPC 30. For ease of understanding, in Fig. 2, the TFT layer 11 is omitted.

As shown in Fig. 1, the alignment mark 13 is provided, as seen in plan view, in a portion outside the TFT layer 11 and a black matrix layer 21 a to be described later.

As shown in Fig. 2, two alignment marks 12 and two alignment marks 13 are provided. The alignment marks 12 and 13 are formed to be rectangular, for example, square. The alignment marks 12 and 13 may be formed either in the shape of a cross or in any other shape.

The alignment marks 12 and 13 are formed in the upper surface 10a of the TFT substrate 10 at the same time when the TFT layer 11 (see Fig. 1) is formed. The alignment marks 12 and 13 may not be formed at the same time when the TFT layer 11 is formed.

The CF substrate 20 is transparent, and is formed with an insulating substrate such as a glass substrate.

In the first embodiment, on the upper surface (the surface on the opposite side of the TFT substrate 10) 20a of the CF substrate 20, wiring, an electrode, a light reception element or the like that is not shown is formed, and the CF substrate 20 functions as a touch panel. In other words, the liquid crystal display panel 2 is a display panel that is integral with the touch panel. As the method of detecting the position of the CF substrate 20 (touch panel), it is possible to employ an infrared method, a capacitance combination method, a resistive film method, an electromagnetic induction combination method, an ultrasonic method or the like.

As shown in Fig. 1, in the lower surface (the surface on the side of the TFT substrate 10) 20b of the CF substrate 20, a color filter layer 21 is formed; in the upper surface 20a, a connection determination mark 22 for determining whether or not the CF substrate 20 and the FPC 40 are properly connected is formed.

The color filter layer 21 includes a black matrix layer 21 a that functions as a light blocking layer and a coloring layer 21b that is colored red, green or blue.

As shown in Fig. 2, two connection determination marks 22 are provided. The connection determination marks 22 are formed to be rectangular, for example, square. The connection determination marks 22 may be formed in the shape of a cross or in any other shape.

As shown in Fig. 1, in the lower surface (the surface on the side of the TFT substrate 10) 30a of the FPC 30, an alignment mark 31 is formed. As shown in Fig. 2, two alignment marks 31 are provided, and, as seen in plan view, are arranged in the same positions as the alignment marks 12 of the TFT substrate 10. The alignment mark 31 is formed, for example, to have the same size and shape as the alignment mark 12 of the TFT substrate 10.

As shown in Fig. 1, in the lower surface (the surface on the side of the CF substrate 20) 40a of the FPC 40, an alignment mark 41 and a connection determination mark 42 are formed. The alignment mark 41 is an example of a "second locating portion" of the present invention.

As shown in Fig. 2, two alignment marks 41 are provided, and, as seen in plan view, are arranged in the same positions as the alignment marks 13 of the TFT substrate 10. Specifically, as shown in Figs. 1 and 2, the alignment marks 41 are provided, as seen in plan view, in portions of the TFT substrate 10 outside the CF substrate 20, and are provided in the portions of the TFT substrate 10 between the CF substrate 20 and the FPC 30. The alignment marks 41 are provided, as seen in plan view, in the portions outside the TFT layer 11 and the black matrix layer 21 a.

The alignment mark 41 is formed, for example, to have the same size and shape as the alignment mark 13 of the TFT substrate 10.

As shown in Fig. 2, two connection determination marks 42 are provided, and, as seen in plan view, are arranged in the same positions as the connection determination marks 22 of the CF substrate 20. The connection determination mark 42 is formed, for example, to have the same size and shape as the connection determination mark 22 of the CF substrate 20.

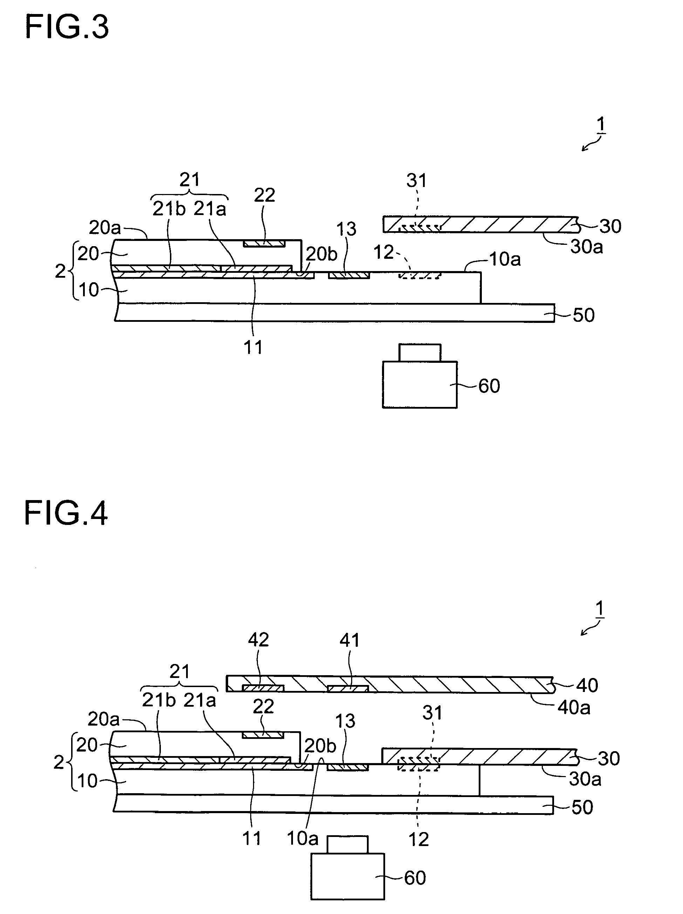

The method of manufacturing the liquid crystal display device 1 according to the first embodiment of the present invention will now be described with reference to Figs. 3 and 4.

As shown in Fig. 3, on a transparent stage 50, the liquid crystal display panel 2 (the TFT substrate 10 and the CF substrate 20) is arranged. Here, the liquid crystal display panel 2 is arranged such that the alignment mark 12 of the TFT substrate 10 is positioned directly above a camera 60. The CF substrate 20 is previously and accurately fixed to a desired position on the TFT substrate 10.

Then, the alignment mark 12 of the TFT substrate 10 and the alignment mark 31 of the FPC 30 are recognized with the camera 60 arranged below the stage 50, and the FPC 30 and the TFT substrate 10 are aligned such that the alignment mark 31 of the FPC 30 is positioned directly above the alignment mark 12 of the TFT substrate 10. Here, the focal position of the camera 60 is set at an intermediate height between the alignment mark 12 and the alignment mark 31. Thus, the camera 60 can simultaneously recognize the alignment mark 12 and the alignment mark 31.

When the camera 60 recognizes the alignment marks 12 and 31, light is preferably applied from below the stage 50. However, the so-called epi-illumination, that is, the application of light from above the FPC 30, may be performed.

Thereafter, the FPC 30 is thermally bonded to the TFT substrate 10 through an adhesive layer (not shown) such as an ACF. Thus, the FPC 30 is electrically connected to the TFT substrate 10.

In this way, the FPC 30 is accurately attached to the desired position of the TFT substrate 10.

Then, as shown in Fig. 4, the camera 60 is moved such that the alignment mark 13 of the TFT substrate 10 is positioned directly above the camera 60. The liquid crystal display panel 2 and the FPC 30 may be moved such that the alignment mark 13 of the TFT substrate 10 is positioned directly above the camera 60.

Then, the alignment mark 13 of the TFT substrate 10 and the alignment mark 41 of the FPC 40 are recognized with the camera 60, and the FPC 40 and the TFT substrate 10 are aligned such that the alignment mark 41 of the FPC 40 is positioned directly above the alignment mark 13 of the TFT substrate 10. Here, the focal position of the camera 60 is set at an intermediate height between the alignment mark 13 and the alignment mark 41. Thus, the camera 60 can simultaneously recognize the alignment mark 13 and the alignment mark 41.

Thereafter, the FPC 40 is thermally bonded to the CF substrate 20 through an adhesive layer (not shown) such as an ACF. Thus, the FPC 40 is electrically connected to the CF substrate 20.

In this way, the FPC 40 is accurately attached to the desired position of the CF substrate 20 (the liquid crystal display panel 2).

With the FPC 40 accurately attached to the CF substrate 20 (the liquid crystal display panel 2), the alignment mark 13 of the TFT substrate 10 and the alignment mark 41 of the FPC 40 are arranged in the same position, as seen in plan view. Hence, the positions of the alignment mark 13 of the TFT substrate 10 and the alignment mark 41 of the FPC 40 are determined, and thus it is possible to determine whether or not the FPC 40 is accurately attached to the desired position of the CF substrate 20 (the liquid crystal display panel 2).

For example, through a gap between the wirings of the TFT layer 11 or the like, the connection determination mark 22 of the CF substrate 20 and the connection determination mark 42 of the FPC 40 may be partially recognized (seen). The connection determination mark 22 of the CF substrate 20 and the connection determination mark 42 of the FPC 40 are arranged in the same position, as seen in plan view. Hence, when the connection determination mark 22 of the CF substrate 20 and the connection determination mark 42 of the FPC 40 can be recognized (seen), the positions of the connection determination mark 22 of the CF substrate 20 and the connection determination mark 42 of the FPC 40 are determined, and thus it is possible to determine whether or not the FPC 40 is accurately attached to the desired position of the CF substrate 20 (the liquid crystal display panel 2).

In the first embodiment, as described above, the alignment mark 13 is provided in the TFT substrate 10, the alignment mark 41 is provided in the FPC 40 and the alignment mark 13 and the alignment mark 41 are arranged in the same position, as seen in plan view. In this way, when the FPC 40 is attached to the CF substrate 20 (the liquid crystal display panel 2), the alignment mark 13 and the alignment mark 41 are aligned, and thus it is possible to align the TFT substrate 10 and the FPC 40. In other words, the CF substrate 20 and the FPC 40 can be indirectly aligned. Consequently, it is possible to easily attach the FPC 40 to the CF substrate 20 (the liquid crystal display panel 2).

In the first embodiment, as described above, unlike the case where the alignment mark is provided in the CF substrate 20, the alignment mark 13 is provided in the TFT substrate 10, and thus it is possible to arrange the alignment mark 13 in a region where the black matrix layer 21 a and the TFT layer 11 are not provided. In this way, since the alignment mark 13 and the alignment mark 41 can be recognized with the camera 60, it is possible to easily align the TFT substrate 10 and the FPC 40. Consequently, it is possible to more easily attach the FPC 40 to the CF substrate 20 (the liquid crystal display panel 2).

In the first embodiment, as described above, the alignment mark 41 is provided, as seen in plan view, in a portion of the FPC 40 outside the CF substrate 20, and thus the black matrix layer 21 a is prevented from being arranged in a position directly below the alignment mark 41. In this way, the alignment mark 41 can be easily recognized with the camera 60.

In the first embodiment, as described above, the alignment mark 41 is provided, as seen in plan view, in a portion of the FPC 40 outside the TFT layer 11, and thus the TFT layer 11 is prevented from being arranged in a position directly below the alignment mark 41. In this way, the alignment mark 41 can be easily recognized with the camera 60.

In the first embodiment, as described above, the CF substrate 20 functions as the touch panel. As described above, when the CF substrate 20 functions as the touch panel, since it is necessary to electrically connect the CF substrate 20 to the connection member (the FPC 40), it is particularly effective to configure the liquid crystal display device 1 as described above.

In the first embodiment, as described above, the alignment mark 41 is provided in the lower surface (the surface on the side of the CF substrate 20) 40a of the FPC 40, and thus the camera 60 arranged below the liquid crystal display panel 2 can easily recognize the alignment mark 41.

In the first embodiment, as described above, the alignment mark 13 is provided in the upper surface (the surface on the side of the CF substrate 20) 10a of the TFT substrate 10, and thus it is possible to form the alignment mark 13 at the same time when the TFT layer 11 is formed in the TFT substrate 10. As compared with the case where the alignment mark 13 is provided in the lower surface (the surface on the opposite side of the CF substrate 20) of the TFT substrate 10, it is possible to reduce the distance between the alignment mark 13 and the alignment mark 41. In this way, when the alignment marks 13 and 41 are recognized with the camera 60, it is possible to reduce the case where either of the alignment marks 13 and 41 goes out of focus. Consequently, it is possible to reduce the decrease in the accuracy of aligning the alignment mark 13 (the TFT substrate 10) and the alignment mark 41 (the FPC 40).

In the first embodiment, as described above, the alignment marks 13 and 41 are provided, as seen in plan view, in portions between the CF substrate 20 and the FPC 30, and thus the FPC 30 and the CF substrate 20 are prevented from being arranged between the alignment mark 13 and the alignment mark 41, with the result that it is possible to easily reduce the case where the alignment mark 41 cannot be recognized with the camera 60.

In the first embodiment, as described above, the two alignment marks 13 are provided, and the two alignment marks 41 are also provided, and thus it is possible to reduce the rotational displacement in the planar direction between the TFT substrate 10 (the liquid crystal display panel 2) and the FPC 40.

In the first embodiment, as described above, the alignment mark 13 and the alignment mark 41 are formed to have the same size and shape as each other, and thus it is possible to more easily align the alignment mark 13 and the alignment mark 41.

### (Second embodiment)

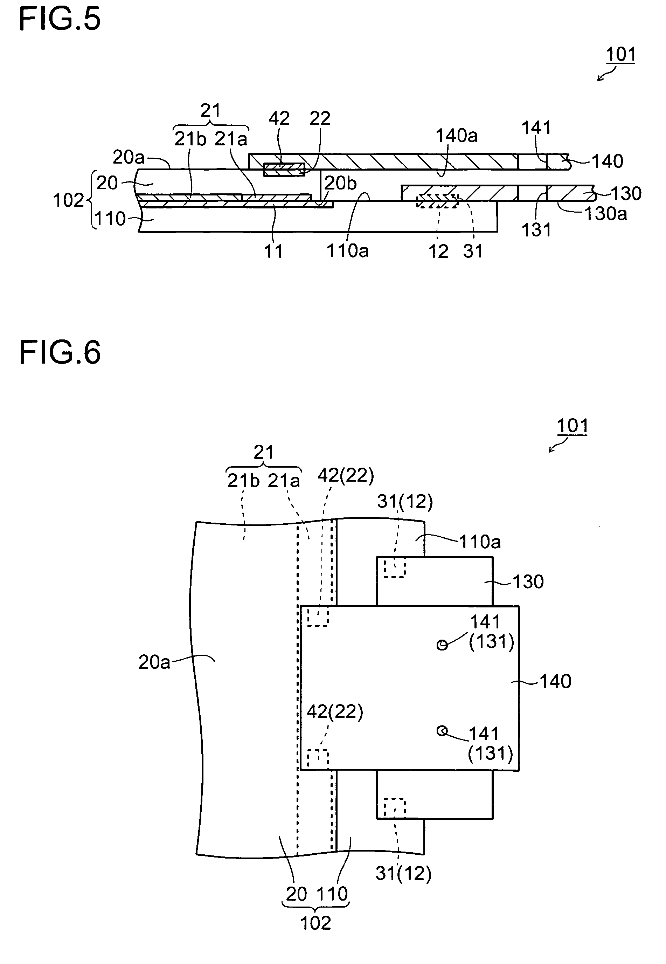

In a second embodiment, with reference to Figs. 5 to 9, unlike the first embodiment, a case where a FPC 130 electrically connected to a TFT substrate 110 and a FPC 140 electrically connected to the CF substrate 20 are aligned and where thus the FPC 140 and the CF substrate 20 (liquid display panel 102) are aligned will be described.

The structure of a liquid crystal display device 101 according to the second embodiment of the present invention will first be described with reference to Figs. 5 and 6.

The liquid crystal display device 101 according to the second embodiment of the present invention includes, as shown in Fig. 5, the TFT substrate 110, the CF substrate 20 that is arranged opposite the TFT substrate 110, the FPC 130 that is electrically connected to the TFT substrate 110 and the FPC 140 that is electrically connected to the CF substrate 20. The liquid crystal display device 101 is an example of the "display device" of the present invention. The TFT substrate 110 is an example of the "first substrate" of the present invention. The FPC 130 is an example of the "first connection member" of the present invention; the FPC 140 is an example of the "second connection member" of the present invention.

Between the TFT substrate 110 and the CF substrate 20, an unillustrated liquid crystal layer is arranged. The TFT substrate 110, the CF substrate 20 and the liquid crystal layer (not shown) constitute the liquid crystal display panel 102 which is integral with a touch panel. The liquid crystal display panel 102 is an example of the "display panel" of the present invention.

The TFT substrate 110 is transparent, and is formed with an insulating substrate such as a glass substrate.

Here, in the second embodiment, in the upper surface (the surface on the side of the CF substrate 20) 110a of the TFT substrate 110, a TFT layer 11 and an alignment mark 12 are formed whereas the alignment mark 13 of the first embodiment is not formed.

In the lower surface (the surface on the side of the TFT substrate 110) 130a of the FPC 130, an alignment mark 31 is formed.

In the second embodiment, in the FPC 130, a through hole 131 is formed. As shown in Fig. 6, two through holes 131 are provided. The through hole 131 is formed to be circular. The through hole 131 is an example of the "first locating portion" of the present invention. In Fig. 6, for ease of understanding, the TFT layer 11 is omitted.

The through holes 131 are provided, as seen in plan view, in portions of the FPC 130 outside the TFT substrate 110.

In the second embodiment, as shown in Fig. 5, in the lower surface (the surface on the side of the CF substrate 20) 140a of the FPC 140, a connection determination mark 42 is formed but the alignment mark 41 of the first embodiment is not formed.

In the second embodiment, in the FPC 140, a through hole 141 is formed. As shown in Fig. 6, two through holes 141 are formed, and are arranged, as seen in plan view, in the same positions as the through holes 131 of the FPC 130. In other words, the through holes 141 are provided, as seen in plan view, in the portions of the FPC 140 outside the TFT substrate 110. The through hole 141 is an example of the "second locating portion" of the present invention.

The through hole 141 is formed, for example, to have the same size and shape as the through hole 131 of the FPC 130.

The other structures in the second embodiment are the same as in the first embodiment.

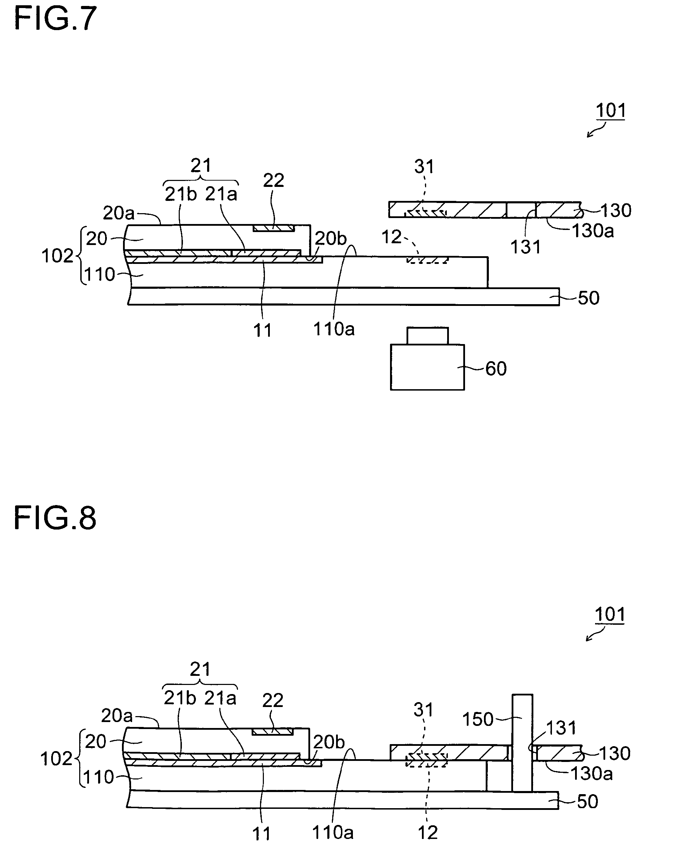

The method of manufacturing the liquid crystal display device 101 according to the second embodiment of the present invention will now be described with reference to Figs. 7 to 9.

As shown in Fig. 7, on a transparent stage 50, the liquid crystal display panel 102 (the TFT substrate 110 and the CF substrate 20) is arranged.

Then, the alignment mark 12 of the TFT substrate 110 and the alignment mark 31 of the FPC 130 are recognized with the camera 60 arranged below the stage 50, and the FPC 130 and the TFT substrate 110 are aligned such that the alignment mark 31 of the FPC 130 is positioned directly above the alignment mark 12 of the TFT substrate 110.

Thereafter, the FPC 130 is thermally bonded to the TFT substrate 110 through an adhesive layer (not shown) such as an ACF. Thus, the FPC 130 is electrically connected to the TFT substrate 110.

In this way, the FPC 130 is accurately attached to the desired position of the TFT substrate 110.

Then, as shown in Fig. 8, a locating pin 150 is inserted through the through hole 131 of the FPC 130. Here, the locating pin 150 may be fixed to the stage 50.

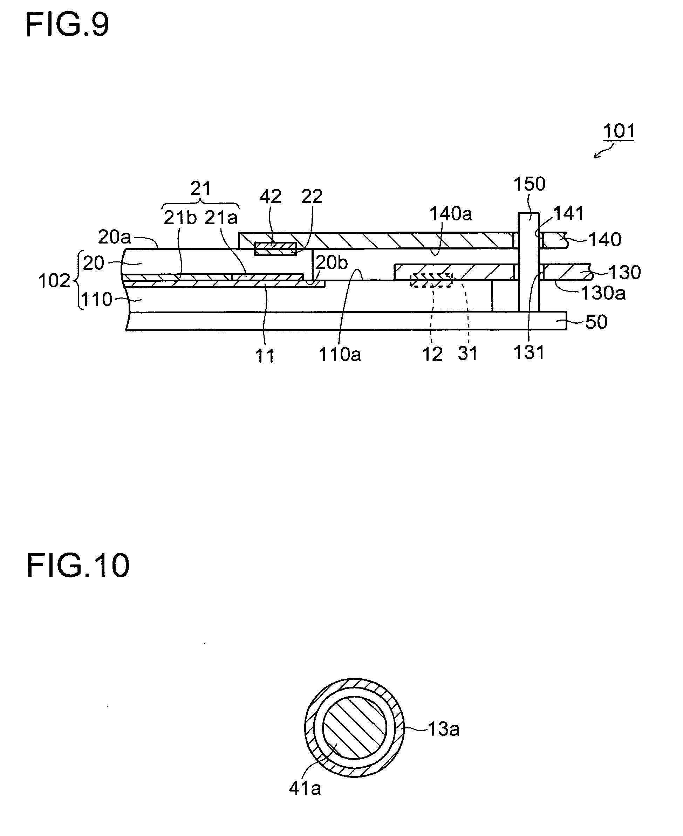

Thereafter, as shown in Fig. 9, the locating pin 150 is inserted through the through hole 141 of the FPC 140. Then, the FPC 140 is thermally bonded to the CF substrate 20 through an adhesive layer (not shown) such as an ACF. Thus, the FPC 140 is electrically connected to the CF substrate 20.

In this way, the FPC 140 is accurately attached to the desired position of the CF substrate 20 (the liquid crystal display panel 102).

The other manufacturing methods in the second embodiment are the same as in the first embodiment.

In the second embodiment, as described above, the through holes 131 are provided, as seen in plan view, in the portions of the FPC 130 outside the TFT substrate 110, and the through holes 141 are provided, as seen in plan view, in the portions of the FPC 140 outside the TFT substrate 110. In this way, the through holes 131 and 141 can be formed, as seen in plan view, in the regions where the black matrix layer 21 a and the TFT layer 11 are not provided. The through holes 131 and 141 are provided, as seen in plan view, in the portions outside the TFT substrate 110, and thus it is possible to insert the locating pin 150 through the through hole 131 without the provision of a through hole in the TFT substrate 110. Thus, it is possible to more easily align the FPC 130 and the FPC 140.

The other effects in the second embodiment are the same in the first embodiment.

The embodiments disclosed herein should be considered to be illustrative, not restrictive in all respects. The scope of the present invention is indicated not by the description of the embodiments discussed above but by the scope of claims, and further includes meanings equivalent to the scope of claims and all modifications within the scope.

For example, although, in the above embodiments, the example where the display panel and the display device are applied to the liquid crystal display panel and the liquid crystal display device, respectively, has been described, the present invention is not limited to this example. They may be applied to a display pannel other than the liquid crystal display panel and the liquid crystal display device.

Although, in the above embodiments, the example where the FPC is used as the connection member that is electrically connected to the TFT substrate and the CF substrate has been described, the present invention is not limited to this example. For example, a connection member, other than the FPC, such as a FFC (flexible flat cable) may be used.

Although, in the above embodiments, the example where the alignment mark 13 and the alignment mark 41 are formed to have the same size and shape has been described, the present invention is not limited to this example. The alignment mark 13 and the alignment mark 41 may not be formed to have the same size; they may not be formed to have the same shape. For example, as with a liquid crystal display device shown in Fig. 10 and according to a first variation of the present invention, an alignment mark 13a of the TFT substrate may be formed in a circumferential shape; an alignment mark 41 a of the FPC may be formed in the shape of a circle having an outside shape smaller than the alignment mark 13a. For example, as with a liquid crystal display device shown in Fig. 11 and according to a second variation of the present invention, an alignment mark 13b of the TFT substrate is formed in the shape of a cross, and thus four square (rectangular) alignment marks 41b may be formed in the FPC.

Likewise, the alignment mark 12 and the alignment mark 31 may not be formed to have the same size; they may not be formed to have the same shape. Likewise, the connection determination mark 22 and the connection determination mark 42 may not be formed to have the same size; they may not be formed to have the same shape.

Although, in the above embodiments, the example where the connection determination mark for determining whether or not the CF substrate and the FPC are properly connected is provided has been described, the present invention is not limited to this example. The connection determination mark may not be provided.

Although, in the above embodiments, the case where the CF substrate functions as the touch panel has been described, the present invention is not limited to this case. The CF substrate may not function as the touch panel.

Although, in the above embodiments, the example where the TFT layer is provided as the thin-film element layer has been described, the present invention is not limited to this example. A thin-film element layer other than the TFT layer may be provided.

### List of Reference Symbols

- 1, 101: liquid crystal display device (display device)
- 2, 102: liquid crystal display panel (display panel)
- 10, 110: TFT substrate (first substrate)
- 10a, 110a: upper surface (the surface of the first substrate on the side of a second substrate)
- 13, 13a, 13b: alignment mark (first locating portion)
- 20: CF substrate (second substrate)
- 22: connection determination mark
- 30, 130: FPC (first connection member)
- 40, 140: FPC (second connection member)
- 40a, 140a: lower surface (the surface of the second connection member on the side of the second substrate)
- 41, 41a, 41b: alignment mark (second locating portion)
- 42: connection determination mark
- 131: through hole (first locating portion)
- 141: through hole (second locating portion)

## Claims

1. A display device comprising:
a display panel that includes a first substrate and a second substrate arranged opposite the first substrate;
a first connection member that is electrically connected to the first substrate of the display panel; and
a second connection member that is electrically connected to the second substrate of the display panel,
wherein a first locating portion is provided in the first substrate or the first connection member, and
a second locating portion corresponding to the first locating portion is provided in the second connection member.

2. The display device of claim 1,
wherein the second locating portion is provided in a portion of the second connection member outside the second substrate.

3. The display device of claim 1 or 2,
wherein a thin-film element layer is provided in a surface of the first substrate on a side of the second substrate, and
the second locating portion is provided in a portion of the second connection member outside the thin-film element layer.

4. The display device of any one of claims 1 to 3,
wherein the second substrate functions as a touch panel.

5. The display device of any one of claims 1 to 4,
wherein the first locating portion includes an alignment mark provided in the first substrate, and
the second locating portion includes an alignment mark provided in the second connection member.

6. The display device of claim 5,
wherein the second locating portion is provided in a surface of the second locating member on the side of the second substrate.

7. The display device of claim 5 or 6,
wherein the first locating portion is provided in a surface of the first substrate on the side of the second substrate.

8. The display device of any one of claims 5 to 7,
wherein the first locating portion is provided in a portion of the first substrate between the second substrate and the first connection member.

9. The display device of any one of claims 1 to 4,
wherein the first locating portion includes a through hole provided in the first connection member, and
the second locating portion includes a through hole provided in the second connection member.

10. The display device of claim 9,
wherein the first locating portion is provided in a portion of the first connection member outside the first substrate.

11. The display device of any one of claims 1 to 10,
wherein the first locating portion and the second locating portion are arranged, as seen in plan view, in a same position.

12. The display device of any one of claims 1 to 11,
wherein the first connection member includes a FPC or a FFC, and
the second connection member also includes a FPC or a FFC.

13. The display device of any one of claims 1 to 12,
wherein, in each of the second substrate and the second connection member, a connection determination mark for determining whether or not the second substrate and the second connection member are connected is provided, and
the connection determination mark of the second substrate and the connection determination mark of the second connection member are arranged in corresponding positions.

14. The display device of any one of claims 1 to 13,
wherein a plurality of the first locating portions are provided, and
a plurality of the second locating portions are provided.

15. The display device of any one of claims 1 to 14,
wherein the first locating portion and the second locating portion are formed that sizes and shapes thereof are the same as each other.
